# EUROPEAN PATENT APPLICATION

(11) **EP 1 669 988 A1**
(43) Date of publication of application: **14.06.2006**
(21) Application number: 04788210.5
(22) Date of filing: 27.09.2004
(51) Int. Cl.: G11B 7/24, B41M 5/26

(54) **OPTICAL RECORDING MEDIUM**

(30) Priority: 25.09.2003 JP 2003334028; 19.02.2004 JP 2004042605
(71) Applicant: Ricoh Company, Ltd., Tokyo 143-8555 (JP)
(72) Inventor: ABE, Mikiko, Kawasaki-shi, Kanagawa 210-0023 (JP); ITO, Kazunori, Yokohama-shi, Kanagawa 224-0006 (JP); DEGUCHI, Hiroshi, Yokohama-shi, Kanagawa 232-0026 (JP); OHKURA, Hiroko, Avenir 77A-103, Yokohama-shi, Kanagawa 224-0034 (JP); KATO, Masaki, Sagamihara-shi, Kanagawa 228-0811 (JP)
(74) Representative: Barz, Peter
(86) International application number: PCT/JP2004/014114
(87) International publication number: WO 2005/031725

(57) **Abstract**

An object of the present invention is to provide an optical recording medium for high speed recording corresponding to 3x speed to 10x speed (10 m/s to 36 m/s) of DVD with a favorable recording sensitivity and overwriting performance (or characteristic). Therefore, the optical recording medium is **characterized by** providing on the transparent substrate at least a first protective layer, a phase-change recording layer having a maximum recording linear velocity of 10.0 m/s or more and is capable of being recorded at least at any one linear velocity of 10.0 m/s to 36.0 m/s, a second protective layer, a reflective layer having a thermal conductivity of 300 W/m·K or more and a layer of a low thermal conductivity material having a thermal conductivity of 7 W/m.K or less disposed between the second protective layer and the reflective layer with a thickness of 0.5 nm or more and 8.0 nm or less.

## Description

### Technical Field

The present invention relates to a rewritable optical recording medium.

### Background Art

In recent years, with an increase in an amount of information, an optical recording medium which is capable of recording and reproducing a large amount of data with high density and high speed has been sought. A phase-change optical recording medium which performs recording and reproducing of information by irradiating a light beam, particularly a phase-change optical disc which has an excellent signal quality, is usable for high density and is capable of easy one-beam overwriting, is a recording medium with an excellent high-speed accessibility.

Such phase-change optical disc has a structure in which at least a first protective layer, a phase-change recording layer which performs a reversible phase change of an amorphous phase and a crystal phase, a second protective layer and a reflective layer made of a metal are provided in this order on an optically-transparent substrate in which a guide groove in the form of a recess which normally guides laser beam scan is formed and furthermore, a resin protective layer is provided on the reflective layer. Moreover, in the case of a laminated optical disc, the structure is such that the abovementioned structure is used on one side or on both sides and the disc is laminated via an adhesive layer.

A method of signal recording and reproducing is as follows.

The optical recording medium is rotated at a constant linear velocity or a constant rotational velocity (angular velocity) by means of a motor, etc. and a focused laser beam having an intensity modulated is irradiated on the recording layer of this medium. At this time, a phase state of the recording layer changes between a crystalline state and amorphous state according to an irradiation condition of a laser beam and a pattern formed as a difference of the phase state becomes a signal pattern. Moreover, reproducing is performed by detecting a reflectance difference developed by the difference in the phase state.

The intensity modulation of the focused laser beam is performed between three output levels. At this time, the highest output level (hereinafter called as "write power") is used for melting of the recording layer. An intermediate output level (hereinafter called as "erase power") is used for heating the recording layer up to a temperature higher than a crystallization temperature below a melting point. Further, the lowest level is used for the control of heating or cooling of the recording layer.

The recording layer which is melted by the laser beam of the write power becomes amorphous or microcrystalline with subsequent the lowest output power thereby decreasing the reflectance of the recording layer and result in a recording mark (amorphous mark). Moreover, with the laser beam of the erase power, the entire recording layer becomes crystalline and erasing becomes possible. Thus, by performing the intensity modulation of the laser beam between three output levels, a crystalline area and an amorphous area are formed alternately on the recording layer and information is recorded.

For realizing a high-speed recording, it is necessary to use a phase-change material having a high crystallization speed in the recording layer. As such phase-change material, attention is focused on materials such as Ge-Te, Ge-Te-Se, In-Sb, Ga-Sb, Ge-Sb-Te and Ag-In-Sb-Te because of high crystallization speed and high erase ratio at a time of high-speed recording.

However, only accelerating the crystallization speed of the recording layer material is not sufficient for realizing the high-speed recording and there is a question of "recording sensitivity", another important issue. For example, although a Ga-Sb based phase-change material known as a recording material for high-speed recording is reported to have extremely high crystallization speed (Nonpatent Literature 1), the mark formation becomes difficult because it has a comparatively high melting point of 630 °C at a eutectic composition and a problem of insufficient sensitivity arises. Even if the laser beam power is raised for compensating the insufficient sensitivity, apart from not being able to achieve sufficient recording property because of a difficulty in realizing a quenching structure required for amorphous mark formation, the overwriting performance (or characteristic) is also degraded because of the degradation of the protective layer due to high power laser.

The followings are examples of known technologies related to the present invention.
In Patent Literature 1, there is disclosed an optical recording medium in which an adhesive layer which includes an oxide is provided between the protective layer and the reflective layer and/or between the protective layer and the recording layer where the oxide is at least any one type selected from Al₂O₃, GeO₂, SiO₂ Ta₂O₅ TiO₂, and Y₂O₃.
In Patent Literature 2, there are disclosed an optical information recording medium in which a first protective layer, a recording layer, a second protective layer, a third protective layer and a reflective layer are formed in order on a transparent substrate and in the third protective layer, materials such as MgO, Al₂O₃, BeO, ZrO₂, ThO₂, UO₂ SiC, TiC, ZrC, AIN, Si₃N₄, and MoSi₂ are used alone or in combination as a material having a high Young's modulus, and an optical information recording medium in which oxides such as SiO₂, Ta₂O₅ and TiO₂, nitrides such as Si₃N₄ and A1N, sulfides such as SmS and SrS and fluorides such as MgF₂ are used alone or in combination with a material having a high Young's modulus.
In Patent Literature 3, there is disclosed an optical recording medium which has a layer having a thermal conductivity control function and an optical absorption correcting function combined together and of which a constituent element is at least one type selected from Ti, V, Cr, Fe, Ni, Zn, Zr, Nb, Mo, Rh, W, Ir, Pt, and Te.
In Patent Literature 4, there is disclosed an optical recording medium in which an absorption correcting layer which includes any one of Ti, Cr, Fe, Ni, Zn, Zr, Nb, Mo, W and Si is provided between the second protective layer and the reflective layer.
In Patent Literature 5, there is disclosed an optical disc which has a lower protective layer, a phase-change recording layer, a multilayered upper protective layer and a reflective heat-releasing layer having silver as a main constituent, and the upper protective layer which is in contact with the reflective heat-releasing layer is made of a nitride of at least one type selected from a group of AlN, SiNx, SiAlN, TiN, BN and TaN or an oxide of at least one type selected from a group of Al₂O₃, MgO, SiO, SiO₂, TiO₂, B₂O₃, CeO₂, CaO, Ta₂O₅, ZnO, In₂O₃ and SnO₂.
In Patent Literature 6, there is disclosed a phase-change optical disc having a base protective layer, a recording layer, an upper transparent protective layer, an interference layer which controls the difference between an absorption coefficient of erase portion and mark portion of the recording layer and a reflective layer formed in sequence on a substrate in which the interference layer is made of one or more materials selected from Si, SiO₂, Ge, MgF₂, Al₂O₃, In₂O₃ and ZrO₂ and the reflective layer is made of a metal selected from Al, Au, Cu and Ag.
In Patent Literature 7, there is disclosed an optical recording medium in which a lower dielectric protective layer, a recording layer, an upper dielectric protective layer and a reflective heat-releasing layer are laminated in sequence on a transparent substrate and a material having composition of (ZrO₂)100- x (SiO₂) x (0 < x <60 mole %) is used as a material of the upper dielectric protective layer.
In Patent Literature 8, there is disclosed an optical recording medium which has at least a first thin-film layer (protective layer), a phase-change optical recording material layer, a second thin-film layer (protective layer) and a reflective layer on a transparent substrate and a material which has a Zr oxide as a main constituent is used as the second thin-film layer.
In Patent Literature 9, there is disclosed a phase-change information recording medium in which an optical transmission layer, a lower protective layer, a recording layer, a first upper protective layer, a second upper protective layer and a reflective heat-releasing layer are laminated in sequence from the side on which laser beam is irradiated, and a thermal conductivity of the first upper protective layer is 10 mW/cmK or less.
In Patent Literature 10, there is disclosed an optical information recording medium which has a recording film, a heat insulation film and a reflective film on a transparent substrate and a thermal conductivity of the heat insulation film is 10 W/mK or less.
In Patent Literature 11, there is disclosed an optical recording medium in which a first protective layer, a recording layer, a second protective layer, a third protective layer including at least 35 atomic % of Si, a reflective layer including at least 95 atomic % of Ag and an overcoat layer are laminated in sequence.

However, in any of the Patent Literatures mentioned above, a medium composition which has a low thermal conductivity layer having a thermal conductivity of 7 W/m.K or less between the second protective layer and the reflective layer having a thermal conductivity of 300 W/m-K or more and effects thereof as in the present invention have not been stated. Moreover, effects of the present invention can not be achieved with a combination which does not satisfy the above condition as shown in Comparative Examples which will be described later.
[Patent Literature 1] Japanese Patent Application Laid-Open (JP-A) No. 06-139615
[Patent Literature 2] JP-A No. 07-307036
[Patent Literature 3] JP-A No. 09-223332
[Patent Literature 4] JP-A No. 2000-339759
[Patent Literature 5] JP-A No. 2000-331378
[Patent Literature 6] Japanese Patent No. 2850754
[Patent Literature 7] JP-A No. 2002-260281
[Patent Literature 8] JP-A No. 2003-91871
[Patent Literature 9] JP-A No. 2002-288879
[Patent Literature 10] JP-A No. 2000-182278
[Patent Literature 11] European Publication No. 1343155
[Nonpatent Literature 1] "Phase-Change optical data storage in GaSb", Applied Opticas, Vol. 26, No. 22115, November, 1987

### Disclosure of Invention

It is an object of the present invention to provide an optical recording medium for high speed recording corresponding to 3x speed DVD to 10x speed DVD (10 m/s to 36 m/s) which exhibit an excellent recording performance (or characteristic) and a favorable recording sensitivity while having no degradation in overwriting performance (or characteristic) and storage reliability.

It was found that in an optical recording medium having a maximum recording linear velocity of 10.0 m/s or more and is capable of being recorded at least at any one linear velocity from 10.0 m/s to 36.0 m/s, it is possible to achieve the abovementioned issue by appropriately combining properties of both of low thermal conductivity material having a thermal conductivity (r. t.) of 7 W/m.K or less and high thermal conductivity material (reflective layer) having a thermal conductivity of 300 W/m.K or more. Moreover, it was found that the overwriting performance (or characteristic) and the storage reliability can be improved further than in the case where the low thermal conductivity layer is not provided and the same low thermal conductivity material is used in the second protective layer and therefore, the present invention was accomplished. The thermal conductivity in the present invention is a measured value at a room temperature (normally about 20 °C).

In the present invention, the recording sensitivity of the optical recording medium having a maximum recording linear velocity of 10.0 m/s to 36.0 m/s is improved by combined action of high insulation (heat storing property) and high flexibility due to low thermal conductivity layer and quenching due to high thermal conductivity reflective layer. When the low thermal conductivity layer having a thermal conductivity of 7 W/m·K or less is provided, the recording sensitivity is improved because a maximum attainable temperature of the phase-change recording layer at the time of recording becomes even higher. Moreover, since the cooling slope corresponding to a change in temperature becomes steep due to the use in combination with the high thermal conductivity reflective layer, a quenching structure necessary for mark formation is realized and favorable recording performance (or characteristic) can be achieved.

The low thermal conductivity layer is required to be provided between the second protective layer and the high thermal conductivity reflective layer.

In other words, the abovementioned issues are solved by inventions in the following <1> to <15> (hereinafter called as the present inventions 1 to 15).
<1> An optical recording medium which is characterized by having on a transparent substrate at least a first protective layer, a phase-change recording layer having a maximum recording linear velocity of 10.0 m/s or more and is capable of being recorded at least at any one linear velocity from 10.0 m/s to 36.0 m/s, a second protective layer, a low thermal conductivity layer and a reflective layer having a thermal conductivity of 300 W/m·K or more, wherein the low thermal conductivity layer having a thickness of 0.5 nm or more to 8 nm or less and a thermal conductivity of 7 W/m·K or less is disposed between the second protective layer and the reflective layer.
<2> The optical recording medium according to above <1> in which a coefficient of thermal expansion of the low thermal conductivity layer is 10 × 10⁻⁶ /°C or less.
<3> The optical recording medium according to any one of above <1> and <2> in which the low thermal conductivity material is an oxide material.
<4> The optical recording medium according to any one of above <1> to <3> in which the low thermal conductivity material does not include sulfur.
<5> The optical recording medium according to any one of above <1> to <4> in which the low thermal conductivity material is an oxide or a complex oxide of at least one type of element selected from IIa group to IVa group and IIb group to IVb group.
<6> The optical recording medium according to any one of above <1> to <5> in which a melting point of the low thermal conductivity material is equal to or higher than a melting point of a material of the recording layer.
<7> The optical recording medium according to any one of above <1> to <6> in which the low thermal conductivity material is represented by the following composition formula:

   (ZrO₂)a(TiO₂)b(SiO₂)c(X1)d

   [where "a" to "d" represent a proportion (mole %)of each oxide which satisfy 50 ≤ a ≤ 100, 0 ≤ b< 50, 0 ≤ c < 30 and 0 ≤ d < 10 (a+b+c+d=100) and X1 is at least one type selected from rare earth oxides.]
<8> The optical recording medium according to any one of above <1> to <7> in which the low thermal conductivity material includes at least any one of metal carbide, semimetal carbide, metal nitride and semimetal nitride in less than 50 mole % of total material.
<9> The optical recording medium according to any one of above <1> to <8> in which the reflective layer is made of pure Ag or an alloy containing Ag as a main constituent.
<10> The optical recording medium according to any one of above <1> to <9> in which a thickness of the reflective layer is 100 nm to 300 nm.
<11> The optical recording medium according to any one of above <1> to <10> in which the recording layer includes at least Ga, Sb, Sn and Ge.
<12> The optical recording medium according to <11> in which the recording layer further includes at least one type of element selected from In, Te, Al, Zn, Mg, Tl, Pb, Bi, Cd, Hg, Se, C, N, Au, Ag, Cu, Mn and rare earth elements and a total content of the element is from 0.1 atomic % to 10 atomic %.
<13> The optical recording medium according to any one of above <1> to <12> in which the thickness of the recording layer is 6 nm to 20 nm.
<14> The optical recording medium according to any one of above <1> to <13> in which the second protective layer is made of a mixture of ZnS and SiO₂.
<15> The optical recording medium according to any one of above <1> to <14> in which a transparent substrate has a wobbled groove having a groove pitch of 0.74 µm ± 0.03 µm, a groove depth of 22 nm to 40 nm and a groove width of 0.2 µm to 0.4 µm and is capable of recording at a recording linear velocity of 3x speed to 10x speed of DVD (10 m/s to 36 m/s).

### Brief Description of Drawings

FIG. 1 is a schematic cross-sectional view of a phase-change optical disc which is an example of a rewritable information optical recording medium of the present invention.
FIG. 2 is a diagram showing results of calculation of a thermal diffusion inside the recording layer of optical discs in Examples and Comparative Examples of the present invention using a thermal calculation software available in the market.

### Best Mode for Carrying Out the Invention

The present invention will be described below in detail.

Inventors of the present invention have found that the recording sensitivity and overwriting performance (or characteristic) are improved significantly in a structure, in which at least a first protective layer, a phase-change recording layer having a maximum recording linear velocity of 10.0 m/s or more and is capable of being recorded at least at any one linear velocity from 10.0 m/s to 36 m/s, a second protective layer and a reflective layer having a thermal conductivity of 300 W/m·K or more are provided on a transparent substrate, by providing a layer of a low thermal conductivity material having a thermal conductivity of 7 W/m·K or less between the second protective layer and the reflective layer in a thickness of 0.5 nm or more and 8 nm or less. Furthermore, it was also found that the recording performance (or characteristic) and storage reliability are improved further than in the case where the low thermal conductivity layer is provided as the second protective layer and therefore, the present invention was accomplished.

First of all, the recording sensitivity of an optical recording medium having a recording linear velocity of 10.0 m/s to 36.0 m/s is improved by an interaction between high insulating property (heat storing property) due to low thermal conductivity layer and a quenching action due to reflective layer which has a high thermal conductivity in the present invention.

When a low thermal conductivity layer having a thermal conductivity of 7 W/m·K or less is provided, the sensitivity is improved because attainable temperature of the recording layer during recording becomes high and furthermore, a quenching structure necessary for mark formation is realized and favorable recording performance (or characteristic) can be achieved since the cooling speed corresponding to a change in temperature becomes fast due to the use in combination with the high thermal conductivity reflective layer.

Moreover, with a regulation of coefficient of thermal expansion of the layer made of the low conductivity material being 10 × 10⁻⁶/°C or less, the degradation of layer itself is suppressed and overwriting performance (or characteristic) can be improved even if the low thermal conductivity layer reaches a high temperature by high-power laser irradiation during recording because smaller thermal expansion leads to smaller expansion and contraction of the low thermal conductivity layer corresponding to a heat variation and the layer becomes resistible to heat variation.

Moreover, the present invention is characterized by providing a low thermal conductivity layer between the recording layer and the reflective layer which is a high thermal conductivity layer. According to a research of the inventors of the present invention, it is discovered that providing a low thermal conductivity layer between the recording layer and the reflective layer, the recording sensitivity is improved further than the recording sensitivity in the case when the low thermal conductivity layer is provided between the first protective layer and the recording layer. This is because, after the recording layer has once reached a high temperature due to a heat storing effect of the low thermal conductivity layer during recording, the quenching of temperature has to be realized immediately in order to form an amorphous mark and it is necessary for the low thermal conductivity layer to be provided adjacent to the reflective layer for performing such process of "quenching from a high temperature condition" in a short time and continuously.

Providing the second protective layer between the recording layer and the reflective layer and providing the low thermal conductivity layer between the second protective layer and the reflective layer are more preferable than providing the low thermal conductivity layer directly between the recording layer and the reflective layer without having the second protective layer for the recording performance (or characteristic) and storage reliability to be further improved. The reason for this is described below.

When using the low thermal conductivity layer as a low thermal conductivity adjusting layer as mentioned above, it is preferable that a thickness thereof is thin. Because if it is thick, apart from making it difficult to adjust the thermal conductivity of a disc, the insulating property becomes superior and overwriting performance (or characteristic) is degraded due to a confined heat in the disc as it becomes thicker. Therefore, it is preferable that the thickness of the low thermal conductivity layer is thin and it is preferably 0.5 nm or more and 8 nm or less.

On the other hand however, even though the thermal conductivity can be controlled by making it thin, there will be a problem that sufficient recording performance (or characteristic) cannot be achieved because of the difficulty in adjusting the optical properties of the disc. Furthermore, when an oxide and a crystalline material are provided as the low thermal conductivity material in contact with the recording layer, the oxide and the crystalline material causes degradation of the storage reliability by oxidizing the recording layer and accelerating the crystallization. Therefore, the second protective layer other than the low thermal conductivity layer is provided between the recording layer and the low thermal conductivity layer to adjust optical properties and moreover, the recording performance (or characteristic) and the storage reliability can be improved by preventing the oxidation of the recording layer and acceleration of crystallization.

Moreover, in the present invention, the thermal conductivity of the reflective layer has to be 300 W/m-K or more. This is because, as described earlier, in combined action with the low thermal conductivity layer, a cooling slope corresponding to a change in temperature during recording is increased and the quenching structure necessary for amorphous mark formation is realized sufficiently. There is no upper limit in particular on the thermal conductivity, however, among materials often used, the maximum value of the thermal conductivity is approximately 430 W/m-K of Ag.

For the reflective layer material composing the optical recording medium, "a metal having a high thermal conductivity and high reflectance" has been considered to be desirable from a viewpoint of "thermal conductivity" related to the adjustment of the cooling rate of heat which is generated at the time of recording and from an "optical" viewpoint related to an improvement in contrast of reproducing signal in which an interference effect is used. Simple substances such as Au, Ag, Cu and Al or alloys which contain these metals as main constituents have been used; however, when Al, having a thermal conductivity of approximately 240 W/m·K which is less than 300 W/m-K, is used for example, the desired quenching condition cannot be realized. In the optical recording medium of the present invention, it is preferable to use an alloy which contains pure Ag or Ag as a main constituent (including 50 atomic % or more) because the thermal conductivity of Ag, 427 W/m·K is extremely high and it is easy to realize the quenching structure appropriate for amorphous mark formation immediately after the recording layer reaches the high temperature even when used in combination with the low thermal conductivity layer.

Moreover, if the high thermal conductivity layer (reflective layer) containing an alloy which has pure Ag or Ag as a main constituent is used in contact with a low thermal conductivity layer containing sulfur, it causes a defect because sulfur reacts with Ag (sulfuration reaction of Ag) and causes degradation. Therefore, in such case, it is necessary to use the low thermal conductivity material which does not include sulfur.

A synergistic effect which is achieved by a combination of the low thermal conductivity layer and the high thermal conductivity reflective layer as mentioned above is particularly notable in the optical recording medium of the recording linear velocity of 10.0 m/s to 36.0 m/s.

The optical recording medium of the recording linear velocity of 10.0 m/s to 36.0 m/s, because of its high speed, is sought to form a large amorphous mark during a short pulse irradiation. Therefore, a high recording laser power becomes necessary, whereas an optical recording medium for low speed recording at a speed lower than 10.0 m/s does not require such a high recording laser power and if the low thermal conductivity is provided, the condition for amorphousization is disrupted because holdup time of heat is too long and the recording performance (or characteristic) is deteriorated. On the other hand, more higher recording laser power is necessary for an optical recording medium for high speed recording at a speed of 36.0 m/s or more, however, it is a region of recording linear velocity in which an appropriate amorphousization condition is difficult to be realized and an optical recording medium having a favorable recording sensitivity and overwriting performance (or characteristic) has not been achieved.

Therefore, as the present invention, there is provided an optical recording medium for high speed recording which has the phase-change recording layer having a maximum recording linear velocity of 10.0 m/s or more and is capable of being recorded at least at any one linear velocity of 10.0 m/s to 36 m/s, the second protective layer, the reflective layer having a thermal conductivity of 300 W/m.K or more and the low thermal conductivity layer having a thickness of 0.5 nm or more and 8 nm or less and a thermal conductivity of 7 W/m.K or less provided between the second protective layer and the reflective layer as essential components, and the optical recording medium which satisfies these conditions has a favorable recording sensitivity, no degradation of the overwriting performance (or characteristic) and the storage reliability and has an excellent recording performance (or characteristic) of 3x speed to 10x speed of DVD (10 m/s to 36 m/s).

Moreover, when a material for which the coefficient of thermal expansion of the low thermal conductivity layer becomes 10 x 10⁻⁶/°C or less is selected, the degradation of layer itself is suppressed and overwriting performance (or characteristic) can be improved even if the low thermal conductivity layer reaches a high temperature by high-power laser irradiation during recording because smaller thermal expansion leads to smaller expansion and contraction of the low thermal conductivity layer corresponding to a heat variation and the layer becomes resistible to heat variation. There is no lower limit in particular on the thermal conductivity, however, there is no material having a coefficient of thermal expansion of "0", in other words, a material which does not undergo thermal expansion among materials which can be used in the present invention.

It is desirable to select an appropriate material for the low thermal conductivity layer from the following view points of (1) to (4) and it is preferably an inorganic oxide.
(1) A material which is optically transparent for the laser beam and has a sufficient stability.
   (From a viewpoint of resistance with respect to a temperature such as melting point, softening point and decomposition temperature)
(2) A material which has a sufficient mechanical strength [from a viewpoint of flexibility and hardness (coefficient of thermal expansion)]
(3) A material which has a favorable adhesion with a metallic reflective layer
(4) A material of which a formation is easy.

Among them, an oxide or a complex oxide of at least any one type of element selected from IIa group to IVa group and IIb group to IVb group is preferable since the oxide or the complex oxide satisfies all the abovementioned conditions. However, in the case of complex oxide, a caution is necessary since there is a possibility of losing flexibility and hardness if a difference in the coefficient of thermal expansion is large.

Moreover, when the abovementioned "sufficient stability" is emphasized, it is desirable to use a low thermal conductivity material having a melting point equal to or higher than the melting point of the material of the recording layer.

Regarding the realization of high-speed recording, it is necessary to control heating and quenching of the recording layer in even a shorter time because a pulse width of a light emission pulse which is irradiated on the recording layer for controlling heating and quenching becomes narrow [because a clock (T) which is a base clock becomes small], even higher laser power becomes necessary at the time of recording. Because, when the pulse width is wide, a time during which a pulse required for cooling is not emitted becomes short and an area and a length of an amorphous mark becomes small and the mark formation of the desired length becomes difficult.

For example, the melting point near a eutectic composition of Ga-Sb which is known as one of the recording layer materials for high-speed recording is near 630 °C which is very high and the temperature of the recording layer has to be raised up to a temperature higher than the melting point by high output laser power. Therefore, it is necessary to select a material of an excellent heat resistance and a melting point of at least equal to or higher than the melting point of the recording layer material for the low thermal conductivity layer which accumulates released heat from high output laser irradiation. An oxide having a melting point of 800 °C or more is preferable and an oxide having a melting point of 1,000 °C or more is more preferable. The concrete examples are ZrO₂ (2,720 °C), TiO₂ (1,840 °C) and SiO₂ (1,710 °C), but it is not restricted to these.

Compounds represented by the following Composition Formula are exemplified as the low thermal conductivity material.

(ZrO₂)a(TiO₂)b(SiO₂)c(X1)d Composition Formula

[Where "a" to "d" represent a proportion (mole %) of each oxide which satisfy 50 ≤ a ≤ 100, 0 ≤ b < 50, 0 ≤ c < 30, 0 ≤ d < 10 (a+b+c+d=100) and X1 is at least one type selected from rare earth oxides.]

ZrO₂ has a particularly excellent flexibility and an extremely low thermal conductivity (κ ≅ 2.0 W/m·K) and the coefficient of thermal expansion (α ≅ 9 × 10⁻⁶/°C)is close to the coefficient of thermal expansion of a metal and it can be easily combined with a metal. Moreover, because of its characteristics of increasing mechanical strength and chemical durability, ZrO₂ is a main material in a composition of the present invention of which the improvement of the "recording sensitivity" and the "overwriting performance (or characteristic)" is the issue.

Since Ti0₂ (K ≅ 6.5 W/m.K, α ≅ 7.6 × 10⁻⁶/°C) which is known as a hard oxide same as ZrO₂ improves a meltability by lowering a high-temperature viscosity of the low thermal conductivity layer, TiO₂ contributes to an improvement of the stability and the durability of the layer.

Even with a material having a thermal conductivity of 7 W/m.K or more, when a combination of appropriate materials is selected such that the thermal conductivity of the overall complex is 7 W/m.K or less, it is possible to design a low thermal conductivity material in which full use of properties of each material can be made.

For example, by combining SiO₂ (κ ≅ 1.6 W/m·K, α ≅ 0.5 × 10⁻⁶/°C) which has a low thermal conductivity similar to ZrO₂, with an intermediate oxide of Al₂O₃ (κ ≅ 30 W/m·K, α ≅ 6.5 × 10⁻⁶/°C), mechanical properties such as modulus of rigidity and heat resistance are improved.

In the case of forming a complex, it is desirable to form a complex by using materials having similar coefficient of thermal expansion. When mistakenly controlled, the thermal expansion becomes a stress and there is a possibility that the structure is destructed. In the case of complex, a control is necessary because if the coefficient of thermal expansion differs, the stress such as the one mentioned above is prone to be developed.

It is possible to adjust the optical properties by adjusting the content of TiO₂ and SiO₂. Since a rare earth oxide which represents Y₂O₃ (κ ≅ 27 W/m·K) reduces a volume variation corresponding to a temperature of the material, the rare earth oxide has functions such as improving the stability with respect to a temperature variation during initialization and recording, and preventing cracking of a target and moreover, it can also improve durability and high-temperature meltability.

When TiO₂, SiO₂ and a rare earth oxide are added as a modification component whereas ZrO₂ is a main constituent material, it is desirable that the content of TiO₂ is 0 mole % or more and less than 50 mole % corresponding to the overall constituent materials, the content of SiO₂ is 0 mole % or more and less than 30 mole % corresponding to the overall constituent materials and the content of a rare earth oxide is 0 mole % or more and less than 10 mole %.

The proportion of mixing is not necessarily restricted to this range, but when the proportion exceeds the above range, the formation of a material having a thermal conductivity of 7 W/m·K or less becomes difficult and the range mentioned above is suitable. When compared with TiO₂, a refractive index of SiO₂ is small and if a proportion of mixing is increased, there is a possibility that the refractive index of overall material is lowered and therefore, an upper limit of SiO₂ used is less than 30 mole %. Therefore, to suppress the lowering of refractive index, it is desirable to mix only TiO₂ which is a high refractive index derivative or to mix TiO₂ and SiO₂ in combination.

Moreover, partially stabilized zirconia in which a part of ZrO₂ is stabilized by adding several percent of a compound such as Y₂O₃, MgO, CaO, Nb₂O₅, Al₂O₃ and a rare earth oxide is more appropriate because it excels in mechanical properties in particular, prevents cracking of the target material used for manufacture of the present invention and further lowers the thermal conductivity compared to a simple ZrO₂.

On the other hand, Y₂O₃ can be included as an example of a rare earth oxide in particular and the content is preferably 0 mole % or more and less than 10 mole % because an addition of a small amount contributes to an improvement in specific elasticity and homogenization of an oxide layer.

It is preferable to include a metal and/or semimetal carbide and/or nitride in the low thermal conductivity material because adhesion of the low thermal conductivity layer with the reflective layer and the protective layer can be improved. Carbides and nitrides of Si, Ge, Ti, Zr, Ta, Nb, Hf, Al, Y, Cr, W, Zn, In, Sn and B are concrete examples of such substances. However, it is not preferable to have a blending quantity of such substances more than 50 mole % because the low thermal conductivity of the material will not be exerted. There is no lower limit in particular, but to exert the effect, it is desirable to blend 1 mole % or more.

Moreover, it is preferable that the thickness of the high thermal conductivity layer (reflective layer) is 100 nm to 300 nm. For sufficiently realizing the desired "quenching effect" and an appropriate mutual action with the low thermal conductivity layer, the thickness of the high thermal conductivity layer is required to be at least 100 nm or more and from the view point of productivity, the upper limit is 300 nm.

For the recording layer, it is preferable to use an alloy which includes at least Ga, Sb, Sn and Ge.

With the recording layer using an alloy including Ga, Sb, Sn and Ge, it is possible to provide an optical recording medium having a favorable recording performance (or characteristic) and storage reliability even in a high-speed recording with a recording linear velocity of 10.0 m/s to 36.0 m/s by giving an attention to high-speed crystallization property of Ga-Sb based material as a recording material and further selecting a phase-change material into which Sn and Ge are added.

Each constituent element will be described below concretely.

In the case of Sb which is a first main constituent element, it is possible to adjust the crystallization speed by varying a proportion of Sb in the constituent material and since the crystallization speed can be accelerated by increasing the proportion of Sb, it is an extremely superior phase-change material indispensable for the realization of high-speed recording.

However, when an attempt is made to realize a high-speed optical recording corresponding to a recording linear velocity of 36.0 m/s with Sb alone, problems arise in the overwriting performance (or characteristic) and the storage reliability. Therefore, Ga becomes indispensable as a second main constituent element which improves the crystallization speed without impairing the overwriting performance (or characteristic) and the storage reliability. Since Ga has an effect of raising the crystallization temperature of the phase-change material with only a small amount, Ga is an element effective for stability of the mark.

Sn which is a third main constituent element has an effect of lowering the melting point in addition to an effect of accelerating the crystallization speed which is decreased due to addition of Ga and can adjust the crystallization temperature which is increased due to addition of Ga. As a result, Sn is effective for an initialization noise reduction and improvement in reflectance and sensitivity of the optical recording medium apart from being capable of improving a negative effect of initialization defects which are caused by high crystallization speed of Ga-Sb based material and therefore, Sn is an extremely superior constituent element for improving the overall recording performance (or characteristic).

Ge which is a fourth main constituent element is indispensable as a constituent element for significantly improving the storage reliability by addition in a small amount.

Among such phase-change materials which includes at least Ga, Sb, Sn and Ge, a phase-change material having a composition formula Ga α Sb β Sn γ Ge δ which satisfy 2 ≤ α ≤ 20, 40 ≤ β ≤ 80, 5 ≤ γ ≤ 25 and 2 ≤ δ ≤ 20 [where, α, β, γ and δ are composition proportion (atomic %) of respective elements and α+β+γ+δ=100] is preferable. When Sn is less than 5 %, the melting point becomes high and the sensitivity is degraded and when Sn is more than 25 %, the crystallization speed becomes too high and the amorphousization becomes difficult, hence not preferable. Moreover, when Sb is less than 40 %, the melting point becomes high and the recording sensitivity is degraded and when Sb is more than 80 %, the storage reliability is degraded, hence not preferable. Furthermore, regarding Ga and Ge, when the amount is less than 2 %, the storage reliability is degraded and when it is more than 20 %, the crystallization speed becomes too high and the initialization becomes difficult.

Moreover, it is desirable to further include at least one type of element selected from In, Te, Al, Zn, Mg, Tl, Pb, Bi, Cd, Hg, Se, C, N, Au, Ag, Cu, Mn and rare earth elements in the recording layer. A total content of 0.1 atomic % to 10 atomic % of these elements is preferable and 0.5 atomic % to 8 atomic % is more preferable.

In has an effect of improving the initialization defects in the high-speed recording material. However, since an excessive addition of In causes degradation of reproducing light and a decrease in reflectance, the content of In is preferably less than 10 atomic %. Moreover, Tl, Pb, Bi, Al, Mg, Cd, Hg, Mn or rare earth elements have an effect of accelerating the crystallization speed and among these elements, Bi which is likely to have the same valency as the valency of Sb is preferable. However, since degradation of the reproducing light and initial jitter is caused by too much content, it is necessary that a composition range for each element is 10 atomic % or less.

Moreover, the storage reliability can be improved by adding Te, Al, Zn, Se, C, N, Se, Au, Ag and Cu apart from Ge. Among them, in the case of A1 and Se, a high-speed crystallization is further improved and moreover, Se has an effect of improving the recording sensitivity. Au, Ag and Cu have excellent storage reliability and are effective elements for improving the initialization defects of high-speed recording material, but on the other hand they also have properties of decreasing the crystallization speed and hindering the high-speed recording performance (or characteristic). Therefore, it is preferable that an upper limit on the total amount of Au, Ag and Cu to be added is 10 atomic %. On the other hand, when the total amount of Au, Ag and Cu to be added is too small, since the effect of addition is unclear, it is preferable that a lower limit on the amount of Au, Ag and Cu to be added is 0.1 atomic %.

Furthermore, it was found that Mn and rare earth elements also show an effect similar to that of In and in particular, Mn is an additive element of excellent storage reliability which does not require Ge amount to be increased so much. An appropriate content of Mn is 1 atomic % to 5 atomic %. When the content is less than 1 atomic %, an effect of accelerating the crystallization speed is not manifested and when the content is too much, the reflectance of unrecorded state (crystalline state) becomes too low.

Thus, by appropriately combining Ga-Sb-Sn-Ge based material and additive elements mentioned above, an optical recording medium having a favorable recording performance (or characteristic) and storage reliability can be designed even in the high-speed recording with a recording linear velocity of 10.0 m/s to 36.0 m/s,.

The thickness of the recording layer is preferably 6 nm to 20 nm. When the thickness is less than 6 nm, the degradation of recording performance (or characteristic) due to overwriting becomes remarkable and when the thickness is more than 20 nm, a movement of the recording layer due to overwriting tends to occur and an increase in jitter intensifies. Moreover, in order to improve erasing performance (or characteristic) by making a difference in absorption rate of crystal and amorphous as small as possible, it is preferable that the thickness of the recording layer is thin and the thickness of 8 nm to 17 nm is more preferable.

It is preferable to use a mixture of ZnS and SiO₂ as the first protective layer and the second protective layer which compensates the optical adjustment. This material is preferable for being not only suitable for modifying the optical properties of a disc for which an adjustment is necessary by providing the low thermal conductivity layer, but also suitable as the protective layer because of excellent heat resistance, thermal conductivity and chemical stability and moreover, the properties such as recording sensitivity and erase ratio are not degraded easily by repeated recording and erasing because of small residual stress of the film.

For the thickness of the first protective layer, an appropriate range is selected according to thermal and optical conditions and it is preferably 40 nm to 200 nm and more preferably 40 nm to 90 nm.

The thickness of 0.5 nm or more is needed for the second protective layer in order to achieve favorable erasing properties and overwriting durability because it has significant influence on a cooling of the recording layer. If the thickness is less than 0.5 nm, it is not preferable because of degradation in overwriting durability due to defects such as cracks and the recording sensitivity is also degraded. Moreover, if the thickness is more than 8 nm, it is not preferable because the mark formation becomes difficult as the cooling rate of the recording layer is slowed resulting in decrease of an area of the mark.

With regard to the substrate of the present invention, a substrate which has a wobbled groove having a groove pitch of 0.74 µm ± 0.03 µm, a groove depth of 22 nm to 40 nm and a groove width of 0.2 µm to 0.4 µm can be used. Accordingly, it is possible to provide a DVD+RW medium on which a high-speed recording of more than 3x speed (concretely corresponding to 3x speed to 10x speed) is possible conforming to standards of the current DVD+RW medium. The purposes of wobbled grooves include allowing making an access to a specific unrecorded track and rotating the substrate at a constant linear velocity.

By "synergistic effect" of high heat storing property and high flexibility due to the low thermal conductivity layer and quenching effect due to the high thermal conductivity reflective layer, the recording sensitivity is improved dramatically and it is possible to provide an optical recording medium having a maximum recording linear velocity of 10.0 m/s or more which is capable of being recorded at least at any one linear velocity of 10.0 m/s to 36 m/s and excels in recording performance (or characteristic) while having no degradation in overwriting performance (or characteristic) and storage reliability.

### Examples

The present invention will be described below concretely by Examples and Comparative Examples, but the present invention is not restricted to these examples and an initializer which is used. Any of materials used in the low thermal conductivity layer of Examples 1 to 13 is a material which satisfies κ ≤ 10 W/m·K and α ≤ 10 × 10⁻⁶/°C. Moreover, evaluation results of the Examples and the Comparative Examples are put together and shown in Table 1.

### [Example 1]

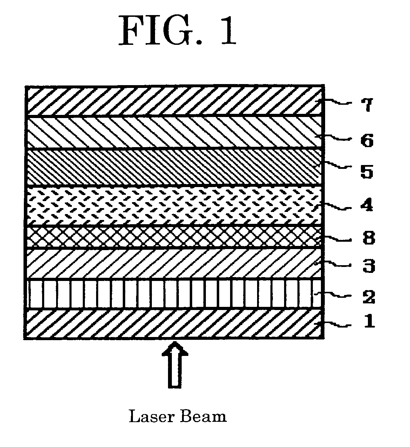

A first protective layer 2, a phase-change recording layer 3, a second protective layer 8, a low thermal conductivity layer 4 and a reflective layer 5 are formed in this order on a substrate 1 by a sputtering method, then a resin protective layer 6 is formed on these layers by a spin-coating method and finally by sticking a substrate for laminating 7, an optical recording medium having a layer structure shown in FIG. 1 was manufactured and initialized.

A substrate of polycarbonate with a diameter of 12cm and a thickness of 0.6mm having a guide groove of 0.74µm track pitch was used as the substrate 1.

In the first protective layer 2, ZnS-SiO₂ (80:20 in mole %) (κ ≅ 8.6 W/m·K) having a thickness of 60nm was used.

In the phase-change recording layer 3, Ga₁₂Sb₈₈ having a thickness of 16nm was used.

In the second protective layer 8, ZnS-SiO₂ (80:20 in mole %) having a thickness of 7nm was used.

In the low thermal conductivity layer 4, ZrO₂ (including 3 mole % Y₂O₃) (κ ≅ 5.1 W/m·K, α ≅ 9.5 × 10⁻⁶/°C) having a thickness of 4 nm was used.

In the reflective layer 5, Ag (κ ≅ 430 W/m·K) having a thickness of 140 nm was used.

In the resin protective layer 6, an ultraviolet curable resin (SD 318 manufactured by Dai Nippon Ink & Chemicals Inc.) was used.

For the substrate for laminating 7, a substrate of polycarbonate with a diameter of 12 cm and a thickness of 0.6 mm was used.

The initialization was performed by using the initializer "PCR DISK INITIALIZER" manufactured by Hitachi Computer Peripherals Co., Ltd. by rotating the optical recording medium at a constant linear velocity and irradiating a laser beam having a power density of 10 mW/µm² to 20 mW/µm² while moving with a constant feed quantity in a radial direction.

Then a C/N ratio, the recording sensitivity and the storage reliability of the optical recording medium were evaluated.

The evaluation was made by using an optical disc evaluation apparatus (DDU-1000 manufactured by Pulstec Industrial Co., Ltd) having a wavelength of 660nm and a pick-up of NA 0.65 under a condition of recording linear velocity of 28m/s (corresponding to 8x speed of DVD) and a linear density of 0.267µm/bit and by evaluating the C/N ratio when a 3T single pattern was overwritten for 10 times and 1,000 times by an EFM+modulation. Moreover, an evaluation of the "storage reliability" in which the recording performance (or characteristic) is evaluated once again after leaving the optical recording medium in a constant temperature bath of 80 °C and 85 % RH for 300 hours was conducted.

Evaluation criteria are as follows.

Regarding the recording performance (or characteristic), in the case of realizing the rewritable optical disc system, it is considered that the C/N ratio has to be at least 45 dB or more, 50 dB or more being preferable, and if the C/N ratio is 55 dB or more, it is considered that more stabilized system can be realized.

Regarding the storage reliability, the recording performance (or characteristic) (shelf property) when a similar recording was performed after leaving the optical recording medium in the constant temperature bath of 80 °C and 85 % RH after initialization was subjected to evaluation. For the unevaluated samples, it is indicated as "none".

Regarding the recording sensitivity, a disc having the optimum recording power of 34 mW or less was marked "A" which is acceptable, a disc having the optimum recording power more than 34 mW and 36 mW or less was marked "B" which is fair and a disc having the optimum recording power more than 36 mW was marked "C" which is unacceptable.

### [Example 2]

An optical recording medium was manufactured similarly as in Example 1 except for changing the material of the low thermal conductivity layer 4 to ZrO₂ (including 3 mole % of Y₂O₃) - 20 mole % TiO₂ (K ≅2.0 W/m.K) and evaluated after initialization.

### [Example 3]

An optical recording medium was manufactured similarly as in Example 1 except for changing the material of the low thermal conductivity layer 4 to ZrO₂ (including 3 mole % of Y₂O₃) - 10 mole % SiO₂ (κ ≅ 3.5 W/m·K) and evaluated after initialization.

### [Example 4]

An optical recording medium was manufactured similarly as in Example 1 except for changing the material of the low thermal conductivity layer 4 to ZrO₂ (including 3 mole % of Y₂O₃) - 20 mole % Al₂O₃ (κ ≅ 3.5 W/m·K) and evaluated after initialization.

### [Example 5]

An optical recording medium was manufactured similarly as in Example 1 except for changing the material of the phase-change recording layer 3 to Ga₁₂Sb₈₀Sn₈.

In the Examples, as compared to Example 1, the recording layer in which the proportion of Sb in the material of the recording layer was decreased and instead, Sn which accelerates the crystallization speed and also has an effect on the improvement of the recording sensitivity was used.

When this optical recording medium was evaluated similarly after initialization, it was realized that a high C/N ratio is achieved at the recording linear velocity of 28 m/s and moreover, there was almost no degradation even after an environment test at 80 °C and 85 % RH. Moreover, an optical recording medium having much lower initialization power and uniform as well as high reflectance as compared to the Example 1 could be achieved and furthermore, by adding Sn, the crystallization speed was further accelerated and the recording at the recording linear velocity of 35 m/s (10x speed of DVD) was also favorable.

### [Example 6]

An optical recording medium was manufactured similarly as in Example 1 except for changing the material of the phase-change recording layer 3 to Ge₁₂Sb₈₀Sn₈.

In the present example, as compared to Example 1, a recording layer in which Ga in the recording layer is substituted by Ge which is effective for storage reliability, the proportion of Sb was further decreased and Sn which accelerates the crystallization speed and also has an effect on the improvement of the recording sensitivity is added instead, was used.

When this optical recording medium was evaluated similarly after initialization, it was realized that with much lower initialization power as compared to Example 1, a uniform and high reflectance initialization could be performed and moreover, high C/N ratio at the recording linear velocity of 28 m/s could be achieved. Furthermore, the optical recording medium had extremely high storage reliability and there was almost no degradation even after leaving for 500 hours for the environment test at 80 °C and 85 % RH.

### [Example 7]

An optical recording medium was manufactured similarly as in Example 1 except for changing the material of the phase-change recording layer 3 to Ga₉Sb₈₃Sn₅Ge₃.

In the present example, as compared to Example 1, a recording layer in which a part of Ga in the material of the recording layer is substituted by Ge which has an effect on the improvement in the storage reliability, the proportion of Sb is further decreased, and instead, Sn which accelerates the crystallization speed and also has an effect on the improvement of recording sensitivity is added, was used.

When this optical recording medium was evaluated similarly after initialization, an extremely high C/N ratio at the recording linear velocity of 28 m/s was achieved and it was realized that there is hardly any degradation of properties even after leaving for 500 hours for the environment test at 80 °C and 85 % RH and that the optical recording medium has a very high storage reliability.

### [Example 8]

An optical recording medium was manufactured similarly as in Example 1 except for changing the material of the phase-change recording layer 3 to Ga₁₂Sb₈₀Mn₈.

In the present example, as compared to Example 1, a recording layer in which the ratio of Sb in the recording layer material is decreased, and instead, Mn which accelerates the crystallization speed and also has an effect on the improvement of the storage reliability is added, was used.

When this optical recording medium was evaluated similarly after initialization, a very high C/N ratio at the recording linear velocity of 28 m/s was achieved and it was realized that there is hardly any degradation of properties even after leaving for 500 hours for the environment test at 80 °C and 85 % RH and that the optical recording medium has a very high storage reliability.

Moreover, by adding Mn, the crystallization speed could be accelerated without impairing the storage reliability and also the recording at the recording linear velocity of 35 m/s (10x speed of DVD) was favorable.

### [Example 9]

An optical recording medium was manufactured similarly as in Example 1 except for changing the phase-change recording layer 3 to Ga₄Sb₇₁Sn₁₈Ge₇ with a thickness of 14 nm and evaluated after initialization.

### [Example 10]

An optical recording medium was manufactured similarly as in Example 9 except for changing the material of the low thermal conductivity layer 4 to ZrO₂ (including 3 mole % Y₂O₃) - 20 mole % TiO₂, and evaluated after initialization.

### [Example 11]

An optical recording medium was manufactured similarly as in Example 9 except for changing the material of the low thermal conductivity layer 4 to ZrO₂ (including 3 mole % Y₂O₃) - 10 mole % SiO₂, and evaluated after initializing.

### [Example 12]

An optical recording medium was manufactured similarly as in Example 9 except for changing the material of the low thermal conductivity layer 4 to ZrO₂ (including 3 mole % Y₂O₃) - 20 mole % Al₂O₃ and evaluated after initialization.

### [Example 13]

An optical recording medium was manufactured similarly as in Example 9 except for changing the material of the low thermal conductivity layer 4 to ZrO₂ (including 3 mole % Y₂O₃) - 20 mole % TiO₂ - 10 mole % SiO₂ and evaluated after initialization.

In Examples 9 to 12, as compared to Examples 1 to 4, the thickness of the phase-change recording layer is 2 nm thinner, and the thickness of the reflective layer is 60 nm thicker. According to these examples, it was confirmed that as the thickness of the phase-change recording layer becomes thin, the storage reliability (particularly shelf property) of the optical recording medium is improved and as the thickness of the reflective layer becomes thick, the C/N ratio after overwriting for 1,000 times is further improved. Moreover, in Example 13, it was confirmed that as compared to Example 10, the C/N ratio after overwriting for 1,000 times is further improved without impairing the recording sensitivity and the recording performance (or characteristic).

### [Example 14]

An optical recording medium was manufactured similarly as in Example 9 except for changing the material of the low thermal conductivity layer 4 to ZrO₂ (including 3 mole % Y₂O₃) - 50 mole % TiO₂ (κ≅1.7 W/m·K) and evaluated after initialization.

When Example 14 was compared with Example 10, the C/N ratio after overwriting for 1,000 times was decreased slightly, but favorable recording performance (or characteristic) above 60 dB was achieved.

### [Example 15]

An optical recording medium was manufactured similarly as in Example 9 except for changing the material of the low thermal conductivity layer 4 to TiO₂ (κ ≅ 6.5 W/m·K) and evaluated after initialization.

When Example 15 is compared with Example 10, the C/N ratio after overwriting for 1,000 times was decreased, but favorable recording performance (or characteristic) above 50 dB was achieved.

### [Comparative Example 1]

An optical recording medium was manufactured similarly as in Example 1 except for changing the material of the low thermal conductivity layer 4 to Si₃N₄.

Si₃N₄ has the thermal conductivity of approximately 25 W/m·K and the coefficient of thermal expansion of 3.2 × 10⁻⁶/°C and the thermal conductivity is beyond the scope of the present invention.

When this optical recording medium was evaluated after initialization, "the combined action of the high heat storing property and high flexibility due to the low thermal conductivity layer and the quenching action due to the high thermal conductivity reflective layer" which is the object of the present invention was not exerted effectively and moreover, a decrease in the recording sensitivity was confirmed. When the phase-change material having high crystallization speed exemplarily shown in the present invention is used for realizing the high-speed recording, currently, the recording power of 30 mW or more is required in order to raise the degree of modulation. Therefore, if the recording sensitivity decreases, the recording power of higher output becomes necessary and the optical recording medium would have little practicability and the optical recording medium itself would be damaged.

### [Comparative Example 2]

An optical recording medium was manufactured similarly as in Example 1 except for changing the material of the low thermal conductivity layer 4 to Al₂O₃.

Al₂O₃ has the thermal conductivity of approximately 30 W/m·K and the coefficient of thermal expansion of 6.5 × 10⁻⁶/°C and the thermal conductivity is beyond the scope of the present invention.

When this optical recording medium was evaluated after initialization, "the combined action of high heat storing property and high flexibility due to the low thermal conductivity layer and quenching action due to the high thermal conductivity reflective layer" which is the object of the present invention as similar to the Comparative Example 1, was not exerted effectively and moreover, a degradation of the recording sensitivity was confirmed.

### [Comparative Example 3]

An optical recording medium was manufactured similarly as in Example 1 except for changing the material of the low thermal conductivity layer 4 to CaO.

CaO has the thermal conductivity of approximately 14.4 W/m·K and the coefficient of thermal expansion of 13.6 × 10-⁶/°C and the thermal conductivity (and the coefficient of thermal expansion in the layer made of the low conductivity material) is beyond the scope of the present invention.

When this optical recording medium was evaluated after initialization, " the combined action of high heat storing property and high flexibility due to the low thermal conductivity layer and quenching action due to the high thermal conductivity reflective layer" which is the object of the present invention as similar to the Comparative Example 1 was not exerted effectively and moreover, a decrease in the recording sensitivity and a degradation of the overwriting performance (or characteristic) was confirmed.

### [Comparative Example 4]

An optical recording medium was manufactured similarly as in Example 1 except for changing the material of the reflective layer to Al.

Al has the thermal conductivity of approximately 240 W/m·K, which is low as compared to approximately 430 W/m.K of Ag, and therefore a weakening of the quenching effect which is required in the reflective layer is anticipated.

When this optical recording medium was evaluated after initialization, a favorable amorphous mark could not be recorded due to weakened quenching effect and sufficient C/N ratio could not be achieved.

### [Comparative Example 5]

When an optical recording medium was manufactured similarly as in Example 1 except for changing the second protective layer 8 to ZrO₂ (including 3 mole % Y₂O₃) of 4 nm thickness and changing the low thermal conductivity layer 4 to ZnS (80 mole %) - SiO₂ (20 mole %) of 7 nm thickness and evaluated after initialization, it was realized that the C/N ratio after the environment test at 80 °C and 85 % RH was 45dB and the storage reliability was degraded remarkably as compared to Example 1.

### [Comparative Example 6]

When an optical recording medium was manufactured similarly as in Example 1 except for changing the thickness of the low thermal conductivity layer 4 to 0.4 nm and evaluated after initialization, the recording performance (or characteristic) was not satisfactory and overwriting performance (or characteristic) was notably deteriorated.

### [Comparative Example 7]

When an optical recording medium was manufactured similarly as in Example 1 except for changing the thickness of the low thermal conductivity layer 4 to 9 nm and evaluated after initialization, "the combined action of high heat storing property and high flexibility due to the low thermal conductivity layer and quenching action due to the high thermal conductivity reflective layer" which is the object of the present invention could not be exerted effectively and the overwriting performance (or characteristic) was not improved.

### [Comparative Example 8]

When an optical recording medium was manufactured similarly as in Example 1 except for not providing the second protective layer 8 and evaluated after initialization, it was realized that the C/N ratio after the environment test at 80 °C and 85 % RH was 45 dB and the storage reliability was degraded remarkably as compared to Example 1.

### [Comparative Example 9]

When an optical recording medium was manufactured similarly as in Example 1 except for not providing the low thermal conductivity layer and changing the thickness of the second protective layer to 11 nm and was evaluated after initialization, the recording sensitivity was failed to improve and the C/N ratio after overwriting for 1,000 times was degraded.

**Table 1**

| | C/N Ratio (dB) after Overwriting for 10 Times | C/N Ratio (dB) after Overwriting for 1000 Times | Recording Sensitivity | Storage Reliability |
|---|---|---|---|---|
| Example 1 | 58 | 55 | B | 55 |
| Example 2 | 57 | 57 | B | 54 |
| Example 3 | 55 | 55 | B | 52 |
| Example 4 | 55 | 55 | B | 52 |
| Example 5 | 61 | 58 | A | 59 |
| Example 6 | 58 | 55 | A | 57 |
| Example 7 | 63 | 60 | A | 60 |
| Example 8 | 57 | 54 | B | 56 |
| Example 9 | 66 | 63 | A | 63 |
| Example 10 | 65 | 65 | A | 62 |
| Example 11 | 63 | 63 | A | 60 |
| Example 12 | 63 | 63 | A | 60 |
| Example 13 | 66 | 65 | A | 63 |
| Example 14 | 63 | 60 | A | 60 |
| Example 15 | 58 | 53 | B | 55 |
| Comp. Ex. 1 | 55 | 49 | C | none |
| Comp. Ex. 2 | 54 | 48 | C | none |
| Comp. Ex. 3 | 52 | 46 | C | 43 |
| Comp. Ex. 4 | 47 | 44 | C | none |
| Comp. Ex. 5 | 53 | 45 | B | 41 |
| Comp. Ex. 6 | 57 | 44 | C | 50 |
| Comp. Ex. 7 | 47 | 44 | C | none |
| Comp. Ex. 8 | 56 | 49 | B | 41 |
| Comp. Ex. 9 | 55 | 44 | C | 49 |

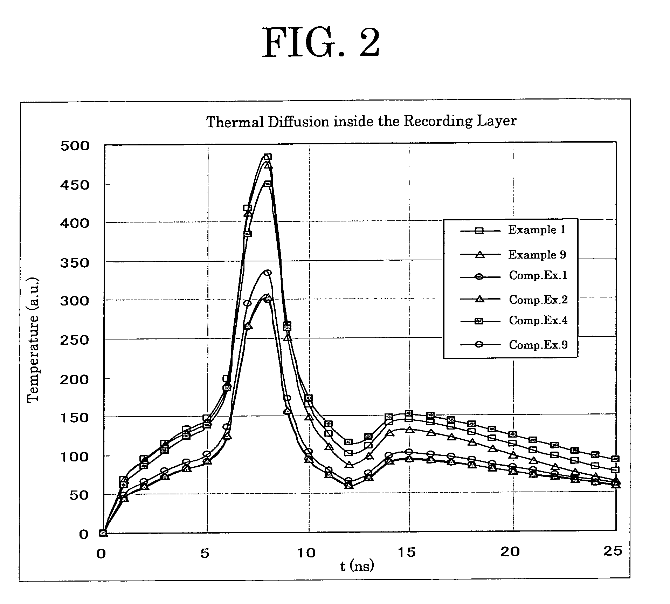

In each of Examples 1 to 15, the C/N ratio of 55 dB or more is achieved after overwriting for 10 times and also regarding the evaluation of the C/N ratio after overwriting for 1,000 times, a favorable result of 50 dB or more was achieved.
Moreover, even after leaving in the constant temperature bath of 80 °C and 85 % RH for 300 hours, the degradation was small and it was confirmed to have favorable storage reliability.
Furthermore, in Examples 2 to 4 and 10 to 13, due to an excellent heat resistance and high hardness of SiO₂, TiO₂ and Al₂O₃ included in the low thermal conductivity layer, it was confirmed that the degradation of the phase-change recording layer was suppressed effectively and that there was no degradation at all even after overwriting for 1,000 times.
Moreover, in FIG. 2, results of calculation for the thermal diffusion inside the phase-change recording layer by using thermal calculation software TEMPROFILE 5.0 (* Note) available in the market are shown for the optical recording media in Examples 1 and 9 and Comparative Examples 1, 2, 4 and 9.
In TEMPROFILE, with a multilayered film on a flat substrate as a model, a plane parallel to the substrate is defined as X-Y plane and a direction perpendicular to the substrate is defined as Z axis direction. Each layer is defined by a film thickness, a complex refractive index, a specific heat and a thermal conductivity and irradiated light is irradiated vertically from a substrate side to a normal direction of the Z axis.
As input data, normal bulk values of specific heat and thermal conductivity at 0 °C to 200 °C and the complex refractive index when λ = 660 nm are used for each layer and moreover, a pulse waveform of the irradiated light was input by using a laser beam having Gaussian profile of rotational symmetry, assuming a case of recording the smallest mark (3T single pattern; 3T mark) in the DVD recording of 8x speed.
(* Note)
A thermal analysis software for an optical disc which is developed by Professor M. Mansuripur of University of Arizona, U.S.A., and marketed by MM Research, Inc.
Even from the calculation results shown in FIG. 2, the rise in temperature inside the phase-change recording layer in Examples 1 and 9 is higher than that of Comparative Examples, the sensitivity is improved and in spite of the end-point temperature being high, a time for cooling down to a low temperature is almost the same as in the Comparative Examples and it is evident that the structure has an excellent quenching effect and is more suitable for the formation of the amorphous mark.

## Claims

1. An optical recording medium comprising:
a transparent substrate;
a first protective layer;
a phase-change recording layer;
a second protective layer;
a low thermal conductivity layer; and
a reflective layer,
wherein the phase-change recording layer has a maximum recording linear velocity of 10.0 m/s or more and is capable of being recorded at least at any one linear velocity of 10.0 m/s to 36.0 m/s,
wherein the reflective layer has a thermal conductivity of 300 W/m-K or more, and
wherein the low thermal conductivity layer comprising a low thermal conductivity material having a thickness of 0.5 nm or more to 8.0 nm or less and a thermal conductivity of 7 W/m.K or less is disposed between the second protective layer and the reflective layer.

2. The optical recording medium according to claim 1, wherein a coefficient of thermal expansion of the low thermal conductivity layer is 10 × 10⁻⁶/°C or less.

3. The optical recording medium according to any one of claims 1 to 2, wherein the low thermal conductivity material is an oxide material.

4. The optical recording medium according to any one of claims 1 to 3, wherein the low thermal conductivity material does not comprise sulfur.

5. The optical recording medium according to any one of claims 1 to 4, wherein the low thermal conductivity material is one of an oxide and a complex oxide of at least one element selected from IIa group to IVa group, and IIb group to IVb group.

6. The optical recording medium according to any one of claims 1 to 5, wherein a melting point of the low thermal conductivity material is equal to or higher than a melting point of a material of the recording layer.

7. The optical recording medium according to any one of claims 1 to 6, wherein the low thermal conductivity material is represented by a following composition formula:
(ZrO₂)a(TiO₂)b(SiO₂)c(X1)d
where "a" to "d" represent a proportion (mole %) of each oxide which satisfy 50 ≤ a ≤ 100,0 ≤ b < 50,0 ≤ c < 30,0 ≤ d < 10 (a+b+c+d=100) and X1 is at least one selected from rare earth oxides.

8. The optical recording medium according to any one of claims 1 to 7, wherein the low thermal conductivity material comprises at least any one of metal carbide, semimetal carbide, metal nitride and semimetal nitride in less than 50 mol% of total material.

9. The optical recording medium according to any one of claims 1 to 8, wherein the reflective layer comprises one of pure Ag and an alloy containing Ag as a main constituent.

10. The optical recording medium according to any one of claims 1 to 9, wherein a thickness of the reflective layer is 100nm to 300nm.

11. The optical recording medium according to any one of claims 1 to 10, wherein the recording layer comprises at least Ga, Sb, Sn, and Ge.

12. The optical recording medium according to claim 11, wherein the recording layer further comprises at least one element selected from In, Te, Al, Zn, Mg, Tl, Pb, Bi, Cd, Hg, Se, C, N, Au, Ag, Cu, Mn and rare earth elements, and a total content of the element is 0.1 atomic% to 10 atomic%.

13. The optical recording medium according to any one of claims 1 to 12, wherein a thickness of the recording layer is 6nm to 20nm.

14. The optical recording medium according to any one of claims 1 to 13, wherein the second protective layer comprises a mixture of ZnS and SiO₂.

15. The optical recording medium according to any one of claims 1 to 14, wherein the transparent substrate comprises a wobbled groove having a groove pitch of 0.74µm ± 0.03µm, a groove depth of 22nm to 40nm, and a groove width of 0.2µm to 0.4µm, and is capable of recording at a recording linear velocity of 3x to 10x speed (10m/s to 36m/s) of DVD.
